# EUROPEAN PATENT APPLICATION

(11) **EP 4 394 830 A1**
(43) Date of publication of application: **03.07.2024**
(21) Application number: 22909314.1
(22) Date of filing: 11.08.2022
(51) Int. Cl.: H01G 4/38, H01G 4/228, H01G 2/08, H02M 7/00, H02M 7/42

(54) **NEW HIGH-VOLTAGE CERAMIC BUS SUPPORT CAPACITOR FOR AUTOMOBILE INVERTER**

(30) Priority: 22.12.2021 CN 202111578213
(71) Applicant: BEIJING NATIONAL NEW ENERGY VEHICLE TECHNOLOGY INNOVATION CENTER CO., LTD., Beijing 102600 (CN)
(72) Inventor: XIU, Guidong, Beijing 102600 (CN); SHEN, Jinliang, Beijing 102600 (CN); HUA, Yang, Beijing 102600 (CN); LIU, Chaohui, Beijing 102600 (CN); YANG, Lianghui, Beijing 102600 (CN); YUAN, Chengyin, Beijing 102600 (CN)
(74) Representative: Wächter, Jochen
(86) International application number: PCT/CN2022/111836
(87) International publication number: WO 2023/115985

(57) **Abstract**

This invention relates to the field of high-voltage ceramic capacitors and discloses a new high-voltage ceramic bus supporting capacitor for automotive inverter, the bus supporting capacitor includes a positive busbar, a negative busbar, and several high-voltage ceramic capacitors; the positive busbar integrates a busbar positive network and several positive busbar interface ports are arranged on one side of the positive network; the negative busbar integrates a busbar negative network and several negative busbar interface ports are arranged on one side of the negative busbar; the negative busbar interface ports are staggered with the positive busbar interface ports and are both used to connect half-bridge SiC module or multilayer composite busbar; all the high-voltage ceramic capacitors are evenly spaced between the positive busbar and the negative busbar, and positive terminals of the high-voltage ceramic capacitors are connected to the positive busbar and join the busbar positive network, and negative terminals are connected to the negative busbar and join the busbar negative network; there is a heat dissipation fluid between adjacent high-voltage ceramic capacitors. This invention can effectively increase space utilization and eliminate the need to consider safety distance and creepage distance between solder pads.

## Description

### FIELD OF TECHNOLOGY

This invention relates to the field of high-voltage ceramic capacitors, specifically to a new high-voltage ceramic bus supporting capacitor for automotive inverter.

### BACKGROUND

Currently, most new energy vehicle inverters use silicon carbide power devices to improve switching frequency and power density, however, silicon carbide power devices are easily limited by the power density of the bus capacitors. To remove the limitation of the power density of the capacitors, high-voltage ceramic capacitors are gradually replacing conventional film capacitors in SiC inverter. High-voltage ceramic capacitors have many advantages such as small size, low internal resistance, and long lifespan. They will dominate the automotive inverter for new energy vehicles in the future.

Existing high-voltage ceramic capacitors generally use thick copper PCBs as BUS busbar for the bus capacitors. The top and bottom layers of the PCB are designed with positive and negative networks of the DC bus, and multiple solder pads are opened on the positive and negative bus networks for soldering and assembling the capacitors. However, these high-voltage ceramic capacitors still have the following disadvantages.
1. Since both the top and bottom layers of the PCB integrate busbar positive and negative networks, the design must fully evaluate the safety distance and creepage distance between solder pads, resulting in a certain waste of space.
2. The terminals of multiple capacitors are all soldered on the same side of the PCB, causing all the bus positive (or negative) networks of the capacitors to go through vias to change layers to the other side of the PCB before converging, and the vias can easily become the main factor limiting the current.
3. The small gaps between the capacitor solder pads and the power terminals connecting to the power modules limit the use environment (humidity, pollutants, etc.) of the capacitors.
4. The busbar PCB is limited in its heat dissipation method due to the installation of capacitors, exposed solder pads, and the presence of vias, making it difficult to effectively dissipate heat from the capacitors.

In summary, to overcome the above deficiencies, this invention designs a new high-voltage ceramic bus supporting capacitor for automotive inverter.

### SUMMARY

### (1) Technical Problem to be Solved

This invention provides a new high-voltage ceramic bus supporting capacitor for automotive inverter, which can effectively increase space utilization and eliminate the need to consider safety distance and creepage distance between solder pads.

### (2) Technical Solution

To solve the above technical problem, this invention provides the following technical solutions: A new high-voltage ceramic bus supporting capacitor for automotive inverter, which includes a positive busbar, a negative busbar, and several high-voltage ceramic capacitors.

The positive busbar integrates a busbar positive network and several positive busbar interface ports are arranged on one side of the positive busbar;
the negative busbar integrates a busbar negative network and several negative busbar interface ports are arranged on one side of the negative busbar; the negative busbar interface ports are staggered with the positive busbar interface ports and are both used to connect half-bridge SiC module or multilayer composite busbar;
all the high-voltage ceramic capacitors are evenly spaced between the positive busbar and the negative busbar, and positive terminals of the high-voltage ceramic capacitors are connected to the positive busbar and join the busbar positive network, while negative terminals of the high-voltage ceramic capacitors are connected to the negative busbar and join the busbar negative network; there is a heat dissipation fluid between adjacent high-voltage ceramic capacitors.

Furthermore, size and design of the positive and negative busbars are identical, and the minimum safety distance of the overall capacitor assembly is a capacitor body.

With this setup, there is no wasted space in the capacitor distribution on the bus supporting capacitor, and there are no safety weak points.

Furthermore, the distance between the adjacent high-voltage ceramic capacitors is 2 mm.

Furthermore, both the positive and negative busbars are PCBs.

With this setup, the high-voltage ceramic capacitors are encapsulated by PCBs on the top and bottom, making it easier and safer to integrate this bus supporting capacitor with other electrical components.

Furthermore, the positive busbar is a flexible copper busbar, and the negative busbar is a PCB.

With this setup, using a flexible copper busbar instead of a PCB for the positive busbar can further reduce overall stray inductance of the bus supporting capacitor.

Furthermore, material of the PCB is an aluminum substrate.

With this setup, the aluminum substrate can accelerate heat dissipation to facilitate multi-dimensional heat conduction for the high-voltage ceramic capacitors.

Furthermore, the heat dissipation fluid dissipates heat clockwise on the negative busbar.

With this setup, the heat dissipation fluid can effectively dissipate the heat generated by the high-voltage ceramic capacitors during operation.

Furthermore, the heat dissipation fluid is air or organic silicone oil.

With this setup, air or organic silicone oil can actively enhance heat dissipation to quickly lower the temperature of the bus supporting capacitor.

### (3) Beneficial Effects

Compared with the prior art, the new high-voltage ceramic bus supporting capacitor for automotive inverter provided by this invention has the following beneficial effects:
1. This invention uses a double-layer sandwich structure to fix the high-voltage ceramic capacitor between the positive and negative busbars, making the mounting of the high-voltage ceramic capacitor reliable and not easily detached;
2. Both the positive and negative busbars only integrate a single network, i.e., all solder pads are on the same network, so there is no safety requirement between components, only minimum mounting distance requirement, thus, there is no need to consider safety distance and creepage distance between solder pads, effectively increasing space utilization and capacitor distribution density in a safer and more reasonable manner;
   moreover, since there is no need for different networks to change layers on the same PCB, i.e., there are no routing vias on the positive and negative busbars, so the total conductor impedance of the bus supporting capacitor can be effectively reduced;
3. The completely overlapping positive and negative busbars and the staggered positive and negative busbar interface ports effectively reduce the overall stray inductance of the bus supporting capacitor.
4. The heat dissipation fluid actively enhances heat dissipation to quickly lower the temperature of the bus supporting capacitor.

### BRIEF DESCRIPTION OF THE DRAWINGS

Figure 1 is a structural schematic diagram of the bus supporting capacitor according to the present invention.
Figure 2 is a heat dissipation schematic diagram of the bus supporting capacitor according to the present invention.

### Reference numbers:

1. positive busbar; 11. positive busbar interface port; 2. negative busbar; 21. negative busbar interface port; 3. high-voltage ceramic capacitor.

### DESCRIPTION OF THE EMBODIMENTS

The following describes the technical solutions of this invention in a clear and complete manner in conjunction with the drawings in the embodiments of this invention. Obviously, the described embodiments are only a part of the embodiments of this invention, not all of them. Based on the embodiments in this invention, all other embodiments obtained by ordinary technical personnel in the field without creative efforts shall fall within the protection scope of this invention.

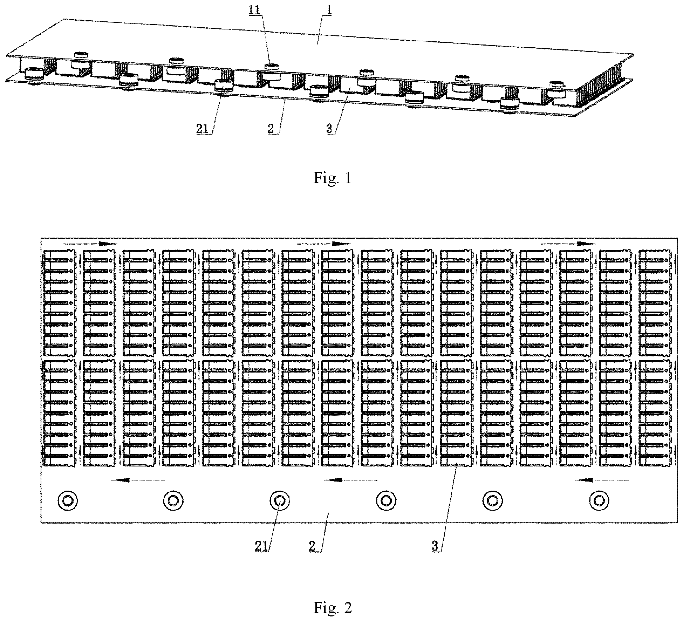

As shown in Figures 1-2, this invention provides a new high-voltage ceramic bus supporting capacitor for automotive inverter, which includes a positive busbar 1, a negative busbar 2, and multiple high-voltage ceramic capacitors 3.

The positive busbar 1 integrates a busbar positive network and six positive busbar interface ports 11 are installed on one side of the positive busbar 1;
the negative busbar 2 integrates a busbar negative network and six negative busbar interface ports 21 are installed on one side of the negative busbar 2; the negative busbar interface ports 21 are staggered with the positive busbar interface ports 11 and are both used to connect half-bridge SiC module or multilayer composite busbar;
all the high-voltage ceramic capacitors 3 are evenly spaced between the positive busbar 1 and the negative busbar 2, and positive terminals of the high-voltage ceramic capacitors 3 are soldered to the positive busbar 1 and join the busbar positive network, while negative terminals are soldered to the negative busbar 2 and join the busbar negative network; there is a heat dissipation fluid between adjacent high-voltage ceramic capacitors 3.

The size and design of the positive and negative busbars 1 and 2 are identical, and the minimum safety distance of overall capacitor assembly is the capacitor body itself. With this setup, there is no wasted space in the capacitor distribution on the bus supporting capacitor, and there are no safety weak points.

Both the positive and negative busbars 1 and 2 are PCBs. With this setup, the high-voltage ceramic capacitors 3 are encapsulated by PCBs on the top and bottom, making it easier and safer to integrate this bus supporting capacitor with other electrical components. Alternatively, the positive busbar 1 is a flexible copper busbar, and the negative busbar 2 is a PCB. With this setup, using a flexible copper busbar instead of a PCB for the positive busbar can further reduce overall stray inductance of the bus supporting capacitor.

This invention takes the case where both the positive and negative busbars 1 and 2 are PCBs with a size of 179 mm*64 mm* 10 mm, and distance between adjacent high-voltage ceramic capacitors is 2 mm.

The material of the PCB is an aluminum substrate. With this setup, the aluminum substrate can accelerate heat dissipation to facilitate multi-dimensional heat conduction for the capacitors.

As shown in Figure 2, the heat dissipation fluid dissipates heat clockwise on the negative busbar 2. With this setup, the heat dissipation fluid can effectively dissipate the heat generated by the high-voltage ceramic capacitors 3 during operation.

The heat dissipation fluid is air or organic silicone oil. With this setup, air or organic silicone oil can actively enhance heat dissipation to quickly lower the temperature of the bus supporting capacitor. This invention takes organic silicone oil as an example for the heat dissipation fluid.

A specific manufacturing process of the new high-voltage ceramic bus supporting capacitor for automotive inverter provided by this invention is as follows:
First, apply solder tin paste on the PCB of the negative busbar 2, then evenly space and paste 32 pieces of FA10 high-voltage ceramic capacitors 3 on the PCB of the negative busbar 2, with a distance of 2mm between adjacent capacitors 3. Then, paste the negative busbar interface ports 21 on the bottom side of the PCB of the negative busbar 2, and then reflow solder;
next, apply solder tin paste on the PCB of the positive busbar 1, then cover the PCB of the positive busbar 1 on the high-voltage ceramic capacitors 3, making the PCBs of the positive and negative busbars 1 and 2 overlap, completing the overall assembly of the positive busbar 1 and the negative busbar 2. Then, reflow solder the assembly, and finally solder the positive busbar interface ports 11 on the bottom side of the positive busbar 1.

Compared with existing capacitor assemblies, the new high-voltage ceramic bus supporting capacitor for automotive inverter provided by this invention has the following beneficial effects:
1. This invention uses a double-layer sandwich structure to fix the high-voltage ceramic capacitors 3 between the positive and negative busbars 1 and 2, making the mounting of the high-voltage ceramic capacitors 3 reliable and not easily detached;
2. Both the positive and negative busbars 1 and 2 only integrate a single network, i.e., all solder pads are on the same network, so there is no safety requirement between components, only minimum mounting distancedistance requirement, thus, there is no need to consider safety distance and creepage distance between solder pads, effectively increasing space utilization and capacitor distribution density in a safer and more reasonable manner;
   moreover, since there is no need for different networks to change layers on the same PCB, i.e., there are no routing vias on the positive and negative busbars 1 and 2, so the total conductor impedance of the bus supporting capacitor can be effectively reduced;
3. The completely overlapping positive and negative busbars 1 and 2 and the staggered positive and negative busbar interface ports 11 and 21 effectively reduce the overall stray inductance of the bus supporting capacitor;
4. The heat dissipation fluid actively enhances heat dissipation to quickly lower the temperature of the bus supporting capacitor;
5. Multiple active cooling methods are introduced for the high-voltage ceramic capacitors 3, importing the design of active organic silicone oil flow channels;
6. The introduction of flexible copper busbars can further reduce stray inductance.

Although the embodiments of this invention have been shown and described, for ordinary technical personnel in the field, it can be understood that various changes, modifications, substitutions, and variations can be made to these embodiments without departing from the principles and spirit of this invention. The scope of this invention is defined by the attached claims and their equivalents.

## Claims

1. A high-voltage ceramic bus supporting capacitor for an automotive inverter, **characterized in that** the bus supporting capacitor includes a positive busbar, a negative busbar, and several high-voltage ceramic capacitors;
wherein the positive busbar integrates a busbar positive network and several positive busbar interface ports are arranged on one side of the positive busbar;
wherein the negative busbar integrates a busbar negative network and several negative busbar interface ports are arranged on one side of the negative busbar; the negative busbar interface ports are staggered with the positive busbar interface ports and are both used to connect half-bridge SiC module or multilayer composite busbar;
wherein all the high-voltage ceramic capacitors are evenly spaced between the positive busbar and the negative busbar, and positive terminals of the high-voltage ceramic capacitors are connected to the positive busbar and join the busbar positive network, and negative terminals of the high-voltage ceramic capacitors are connected to the negative busbar and join the busbar negative network; wherein there is a heat dissipation fluid between adjacent high-voltage ceramic capacitors.

2. The high-voltage ceramic bus supporting capacitor for an automotive inverter according to claim 1, **characterized in that** size and design of the positive busbar and the negative busbar are identical, and the minimum safety distance of the overall capacitor assembly is a capacitor body.

3. The high-voltage ceramic bus supporting capacitor for an automotive inverter according to claim 2, **characterized in that** the distance between adjacent high-voltage ceramic capacitors is 2 mm.

4. The high-voltage ceramic bus supporting capacitor for an automotive inverter according to claim 2, **characterized in that** both the positive busbar and the negative busbar are PCBs.

5. The high-voltage ceramic bus supporting capacitor for an automotive inverter according to claim 2, **characterized in that** the positive busbar is a flexible copper busbar and the negative busbar is a PCB.

6. The high-voltage ceramic bus supporting capacitor for an automotive inverter according to claim 4 or 5, **characterized in that** the material of the PCB is an aluminum substrate.

7. The high-voltage ceramic bus supporting capacitor for an automotive inverter according to claim 4 or 5, **characterized in that** the heat dissipation fluid dissipates heat clockwise on the negative busbar.

8. The high-voltage ceramic bus supporting capacitor for an automotive inverter according to claim 7, **characterized in that** the heat dissipation fluid is air or organic silicone oil.
